# EUROPEAN PATENT APPLICATION

(11) **EP 3 247 000 A1**
(43) Date of publication of application: **22.11.2017**
(21) Application number: 15877681.5
(22) Date of filing: 21.12.2015
(51) Int. Cl.: H01R 13/24, B62B 3/00

(54) **CHARGING CONNECTOR AND TROLLEY HAVING SAME**

(30) Priority: 13.01.2015 CN 201520021764 U
(71) Applicant: Chigoo Interactive Technology Co., Ltd., Xinwu District Wuxi Jiangsu 214028 (CN)
(72) Inventor: CHEN, Tao, Wuxi Jiangsu 214028 (CN); PAN, Chuanrong, Wuxi Jiangsu 214028 (CN)
(74) Representative: Hautier IP
(86) International application number: PCT/CN2015/098010
(87) International publication number: WO 2016/112770

(57) **Abstract**

Disclosed is a charging connector for a trolley having a power storage module, including a body carrying a circuit and a first electrode plate and a second electrode plate provided at two ends of the body respectively, the first electrode plate and the second electrode plate being electrically connected through the circuit and the first electrode plate or the second electrode plate having an elastic arch portion with a variable arch height. The charging connector can keep the elastic contact between the second electrode of a front charging connector and the first electrode of a rear charging connector during front-back series connection, eliminating the defect that the current charging connector has bad contact. The trolley with the connector can be charged reliably and the power energy can be used to a peripheral device onboard the trolley. Such a multimedia trolley does not need repeated manual checking.

## Description

### TECHNICAL FIELD

The present invention relates to a charging component, and in particular to a charging connector with improved electrical connection performance and a multimedia trolley having the same.

### BACKGROUND

With the development of commerce and public services, movable devices such as trolleys and luggage vans are widely used in public occasions such as shopping malls, supermarkets and airports to facilitate a user carrying luggage or articles. The existing trolleys and luggage vans are usually provided with electronic playing devices for the user to acquire information, such as displaying merchant location information, navigation information, advertisement information and other relevant information. As such, when a trolley is in an idle state, it needs to be charged. Currently, the trolley connector is provided at the bottom of the trolley. When two front and back trolleys are stacked, the female socket electrode of a front trolley contacts the male plug electrode of a back trolley to form a closed loop and then the front trolley is connected to an AC-DC conversion device and thus a plurality of trolleys can be charged. However, a male plug metal electrode and a female socket metal electrode of a trolley may not be fitted with each other tightly. Sometimes even if two front and back trolleys are stacked in the space position, the male plug metal electrode of the back trolley does not contact the female socket metal electrode of the front trolley, thus no closed circuit is formed and thus charging cannot be performed. When a plurality of trolleys are stacked, it is difficult to find out which two trolleys fail to complete electrical connection. In addition, the current male plug metal electrode and female socket metal electrode are designed as flake, friction will be generated during contact, making it liable to spark, thereby affecting the service life of the charging connector and causing safety hazard.

Thus, it would be helpful to provide a charging connector which has closely coupled male plug electrode and female socket electrode and can reduce mutual friction.

### SUMMARY

In view of the problems in the prior art, the present invention provides a charging connector for a trolley having a power storage module, including a body carrying a circuit and a first electrode plate and a second electrode plate provided at two ends of the body respectively, the first electrode plate and the second electrode plate being electrically connected through the circuit and the first electrode plate or the second electrode plate having an elastic arch portion with a variable arch height.

In some embodiments, a fixation arm at one end of the arch portion is connected to the circuit of the body, and a free arm at the other end is accommodated in a guidance groove of the body. The free arm has different static positions corresponding to the arch heights of different arch portions in the guidance groove.

The arch portion extends to form a fixation arm and a free arm and is connected to the body through the fixation arm. The free arm can move in the guidance groove to relieve the stress of the arch region. Such a provision can make the structure of the electrode of the arch portion more stable while ensuring elasticity.

In some embodiments, the arch portion is provided with a pierced opening for enhancing the elasticity of the arch portion. The arch portion is provided with opening figures of various shapes in a pierced way, which may effectively increase the elasticity of the electrode and disperse the stress to a great extent. The weight of the electrode may also be reduced and material can be saved.

In some embodiments, a recess in the arch portion is provided with a support plate for limiting the arch height of the arch portion. The support plate can help the arch portion recover to the original shape more rapidly after extrusion deformation while limiting the arch height of the arch portion.

In some embodiments, the second electrode plate is a copper plate and the support plate is a manganese steel plate.

The present invention employs copper which has good conductivity but is apt to deform as the material of the arch portion, the fixation arm and the free arm. In order to prevent the arch portion from exceeding the maximum deformation amount when being extruded, a support plate made of a manganese steel material is also provided in a recess of the arch portion. The manganese steel plate per se has a certain deformation amount, which is however far less than that of the arch portion made of copper, and can provide a support force thereto but generally will not influence the elastic contact between the arch portion of the second electrode and the first electrode.

In some embodiments, the first electrode plate and the second electrode plate are biased to each other with respect to the vertical direction, and the bias distance L of the first electrode plate and the second electrode plate in the vertical direction is smaller than the maximum arch height Hmax of the arch portion. Such a provision can make the electrodes contact each other conveniently when two front and back charging connectors are stacked and connected.

In some embodiments, the first electrode plate and the second electrode plate form a current channel and the charging connector has two independent current channels such that the charging connector can be better connected to a DC power source for charging.

In some embodiments, one of the first electrode plate and the second electrode plate is a planar member and the other is a curved member with an arch portion so as to maintain a linear contact between the electrodes. As such, sparks generated from contact and friction between the electrodes, which may cause safety hazard, can be prevented, and shortening of the service life due to friction between the electrodes can also be avoided.

In addition, the present invention also provides a trolley including a power storage module provided on a trolley body for supplying power to a peripheral device; and a charging connector provided at the bottom of the trolley body and connected to the power storage module, the charging connector and the bottom of the trolley body being configured such that the first electrode plate and the second electrode plate extends out of the bottom of the trolley body.

The charging connector provided in the present invention can keep the elastic contact between the second electrode (female socket electrode) of a front charging connector and the second electrode (male plug electrode) of a rear charging connector during front-back series connection, forming a closed loop. The defect that the current charging connector has bad contact can be overcome. Impact on the circuit or damage to the electrode due to spark generated by the transition friction between the first electrode and the second electrode can be avoided. In addition, the multimedia trolley adopting such a charging connector provided in the present invention can be charged by the above charging connector reliably and the power energy can be used to a peripheral device onboard the trolley. The situation where two front and back trolleys are stacked in position but the internal circuits are not connected in series can be avoided effectively. Accordingly, such a multimedia trolley has reliable electrical connection, which obviates necessity of repeated manual checking of the circuit connection.

### BRIEF DESCRIPTION OF THE DRAWINGS

Fig. 1 is a front view of a charging connector according to an embodiment of the present invention;
Fig. 2 is a rear view of a charging connector according to an embodiment of the present invention;
Fig. 3 is a view of a female socket electrode according to an embodiment of the present invention;
Fig. 4 is a view of the charging connectors in Fig. 1 connected in series and connected to an external power source;
Fig. 5 is a view of a multimedia trolley having a charging connector according to an embodiment of the present invention; and
Fig. 6 is a position relationship view of trolleys charged in batch according to an embodiment of the present invention.

### DETAILED DESCRIPTION

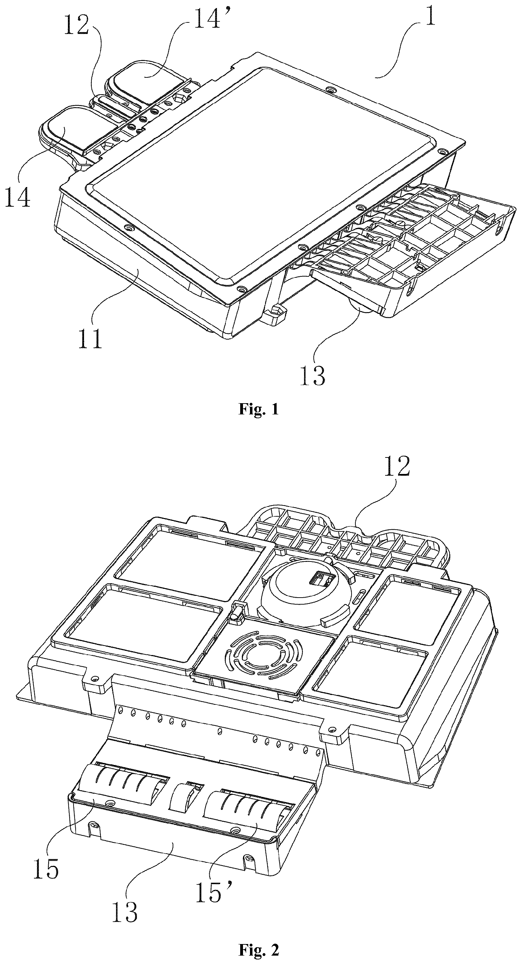

Referring to Figs. 1 and 2, a charging connector 1 according to an embodiment of the present invention includes an insulation housing 11, a male plug body 12 provided at the head end of the insulation housing 11 and projecting outwards and a female socket body 13 provided at the tail end of the insulation housing 11 and projecting outwards. The upper surface of the mail body 12 is provided with two male plug electrode plates 14 and 14' at intervals. The lower surface of the female socket body 13 is also provided with two female socket electrode plates 15 and 15' at intervals. The positions of the male plug electrode plates 14 and 14' correspond to those of the female socket electrode plates 15 and 15' such that when two charging connectors are arranged front and back, the female socket electrode plates 15 and 15' of the front charging connector can contact the male plug electrode plates 14 and 14' of the back charging connector to form two insulated electrode groups. The male plug electrode plates 14 and 14' and the female socket electrode plates 15 and 15' may employ copper with good conductivity and low costs.

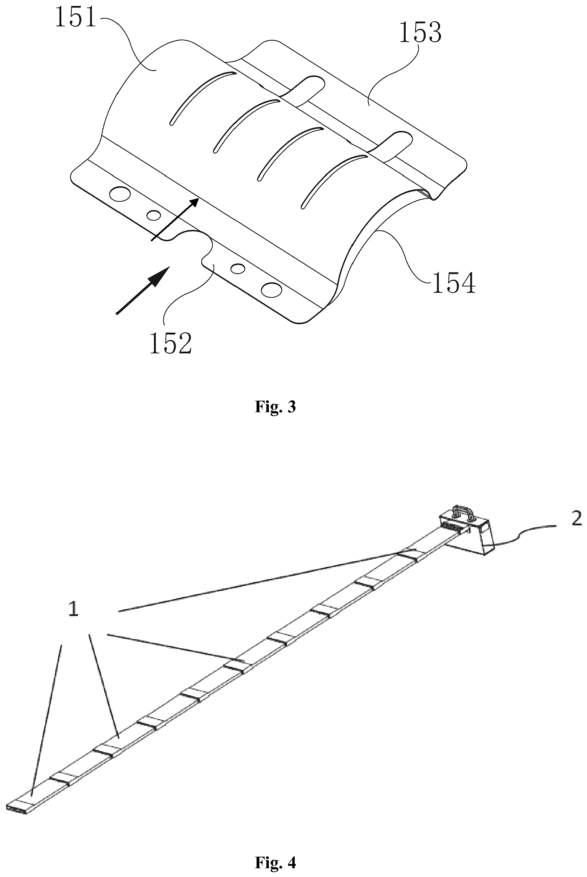

As shown in Fig. 3, the female socket electrode plates 15 and 15' in this embodiment are arch plates which have an arch portion 151 and a fixation end 153 and a free end 152 projecting outwards from two ends of the arch portion 151. The female socket body 13 is provided with a guidance groove for installing the female socket electrode plates 15 and 15'. The fixation ends 153 of the female socket electrode plates 15 and 15' come into the guidance groove and are fixedly connected to the female body 13. The free ends 152 also come into the guidance groove but are not fixedly connected to the female socket body and slightly move opposite to the arrow shown in Fig. 3 when the female electrode plates 15 and 15' are deformed due to stress or recovered by relieving stress. The arch portion 151 projects outwards from the lower surface of the female socket body 13. Thus, the female socket electrode plates 15 and 15' have elastic arch portions 151 with variable arch height. The free end 152 has different static positions corresponding to the different arch heights of arch portions 151 in the guidance groove.

In an embodiment, the fixation end 153 is fixed on one side near the insulation housing 11. The free end is located at one side away from the insulation housing 11. The arch portion 151 is provided with a pierced opening for enhancing elasticity which can be a plurality of elongate grooves provided lengthwise of the arch portion 151.

As shown in Fig. 4, when a plurality of charging connectors 1 are stacked front and back, the male plug electrode plates 14 and 14' of a back charging connector contact the female socket electrode plates 15 and 15' of a front charging connector to form a series circuit. The male plug electrode plates 14 and 14' of the charging connector at the most front end is connected to an AC-DC conversion device 2. The AC-DC conversion device 2 may adopt SP-320 series products from MEAN WELL Company, Taiwan, CHINA, the power of which may be 1500∼300W. The male plug electrode plates 14 and 14' are smooth metal plates with a relatively large thickness which can extrude the female socket electrode plates 15 and 15' such that the female socket electrode plates 15 and 15' deform. During extrusion, the male plug electrode plates 14 and 14' and the female socket electrode plates 15 and 15' substantially keep linear contact, which can effectively avoid generating spark due to mutual friction in surface contact and can prevent the damage of the male plug electrode plates 14 and 14' and the female socket electrode plates 15 and 15', thereby prolonging the service life.

In addition, since the female socket electrode plates 15 and 15' are copper plates, the material thereof is relatively soft and cannot recover to the original state after being extruded several times. Thus, a manganese steel plate 154 of a corresponding shape may be provided at the inner side of the arch portion 151 of the female socket electrode plates 15 and 15'. Since the manganese steel plate 154 is not easy to deform compared to the copper plate, the copper plate can be supported to some extent and also be more readily to recover to the original state after being extruded with the assistance of the manganese steel plate 154. In addition, the manganese steel plate 154 can also limit the arch height of the arch portion 151 to avoid excessive deformation which may render it difficult to recover to its original state.

The male plug electrode plates 14 and 14' and the female socket electrode plates 15 and 15' are biased to each other relative to the vertical direction. The bias distance L of the male plug electrode plates 14 and 14' and the female socket electrode plates 15 and 15' in the vertical direction is smaller than the maximum arch height Hmax of the arch portion.

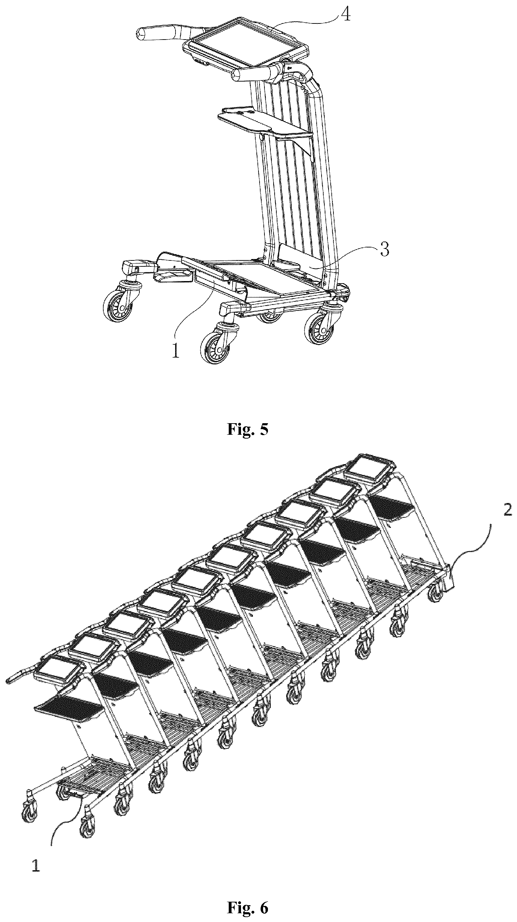

As shown in Figs. 5 and 6, a multimedia trolley adopting the above charging connector 1 is shown schematically. The charging connector 1 is installed at the bottom of the multimedia trolley and connected to the power storage module 3 so as to transfer the electrical energy to the power storage module 3 through the charging connector. The power storage module 3 is connected to a multimedia player 4 installed on the multimedia trolley and powers the same. The charging connector 1 and the bottom of the trolley body are configured such that the male plug electrode plates 14 and 14' and the female socket electrode plates 15 and 15' extend out of the bottom of the trolley body. When a plurality of trolleys are stacked front and back, two independent current channels may be formed by the male plug electrode plates 14 and 14' and the female socket electrode plates 15 and 15' of the charging connector to form a series circuit and simultaneously charge all multimedia trolleys.

It should be understood that those skilled in the art may make various modifications, changes and variations to the above embodiments without departing from the scope of the present invention defined by the claims. The claims shall be construed from the entirety and coincide with the broadest scope consistent with the description and are not limited to the examples or embodiments in the detailed description.

## Claims

1. A charging connector for a trolley having a power storage module, comprising:
a body carrying a circuit; and
a first electrode plate and a second electrode plate provided at two ends of the body respectively, the first electrode plate and the second electrode plate being electrically connected through the circuit and the first electrode plate or the second electrode plate having an elastic arch portion with a variable arch height.

2. The charging connector according to claim 1, wherein a fixation arm at one end of the arch portion is connected to the circuit of the body, a free arm at the other end is accommodated in a guidance groove of the body, and the free arm has different static positions corresponding to the arch heights of different arch portions in the guidance groove.

3. The charging connector according to claim 1, wherein the arch portion is provided with a pierced opening for enhancing the elasticity of the arch portion.

4. The charging connector according to claim 2, wherein a recess in the arch portion is provided with a support plate for limiting the arch height of the arch portion.

5. The charging connector according to claim 4, wherein the support plate has a shape corresponding to that of the arch portion.

6. The charging connector according to claim 5, wherein the second electrode plate is a copper plate and the support plate is a manganese steel plate.

7. The charging connector according to claim 1, wherein the first electrode plate and the second electrode plate are biased to each other relative to the vertical direction, and the bias distance L of the first electrode plate and the second electrode plate in the vertical direction is smaller than the maximum arch height Hmax of the arch portion.

8. The charging connector according to claim 1, wherein the first electrode plate and the second electrode plate form a current channel and the charging connector has two independent current channels.

9. The charging connector according to claim 1, wherein one of the first electrode plate and the second electrode plate is a planar member and the other is a curved member with an arch portion.

10. A trolley, comprising:
a power storage module provided on a trolley body for supplying power to a peripheral device; and
a charging connector according to any one of claims 1 to 8 connected to the power storage module and located at the bottom of the trolley body, the charging connector and the bottom of the trolley body being configured such that the first electrode plate and the second electrode plate extends out of the bottom of the trolley body.
